# EUROPEAN PATENT APPLICATION

(11) **EP 1 530 279 A2**
(43) Date of publication of application: **11.05.2005**
(21) Application number: 04077930.8
(22) Date of filing: 25.10.2004
(51) Int. Cl.: H02K 11/04

(54) **Container with a high dissipation capacity for control devices of electric motors**

(30) Priority: 05.11.2003 IT MI20032131
(71) Applicant: SP.EL. S.r.L., 20090 Trezzano sul Naviglio (Milano) (IT)
(72) Inventor: Franzolini, Luciano, Milano (IT)
(74) Representative: Raimondi, Margherita

(57) **Abstract**

Container for control and actuating devices (2) of electric motors (1,1a), comprising a side wall (10a), a front wall (11) able to be constrained to the motor (1) and a rear wall (12) able to come into thermal contact with the power components (2a) of the said control and actuating devices.

## Description

The present invention relates to a container with a high dissipation capacity, in particular for control and actuating devices of electric motors.

It is known in the product sector relating to the manufacture of electric motors that there exists the need to equip the same with apparatus for controlling operation thereof.

It is also known that, in the most recent embodiments, said control apparatus are combined with the motor by means of corresponding housings constrained in various manners to the said motor, normally on the opposite side to that of the drive shaft to be coupled with the load which is to be rotated. As an alternative, embodiments are also known where the casing of the motor is designed to receive the control electronics.

Although fulfilling their function, these embodiments nevertheless have the drawback that it is difficult to dissipate the heat generated by the power elements of the control section which are enclosed inside containers - sometimes small in size - and are therefore subject to overheating due to accumulation of their own heat together with that of the surrounding environment and/or motor.

The technical problem which is posed, therefore, is to provide a container for control devices of electric motors and the like, which may be combined with the latter and which allows effective transmission and dissipation externally of the heat generated by the power elements of the said control system.

Within the context of this problem it is also required that this container should have small dimensions, be easy and inexpensive to produce and assemble and be easily adaptable to the different levels of dissipation required depending on the different control systems and the different conditions of use of a same motor and/or be able to be assembled on different motors.

These results are obtained according to the present invention by a container for control and actuating devices of electric motors equipped with power components, comprising a side wall, a front wall able to be constrained to the motor and a rear wall, said rear wall being able to come into thermal contact with the power components of the said control and actuating devices in order to dissipate the heat.

The present invention relates furthermore to an electric motor equipped with this container.

Further details may be obtained from the following description of a non-limiting example of embodiment of the subject of the present invention provided with reference to the accompanying drawings in which:
- Figure 1 shows a schematic cross-sectional view of a motor with a dissipation housing for a control device;
- Figure 2 shows a cross-sectional view, similar to that of Fig. 1, of a second example of embodiment of the dissipation container according to the present invention;
- Figure 3 shows a cross-sectional view, similar to that of Fig. 2, of the same container expanded by means of a multiple modular unit;
- Figure 4 shows a cross-sectional view, similar to that of Fig. 1, of a further embodiment of the container according to the present invention.

As shown, the motor 1, which is per se conventional and therefore only schematically shown together with its drive shaft 1a (referred to as "front part" for the sake of convenience of the description) is associated with a control device 2 which comprises power elements 2a and is inserted inside a container 10 constrained to the rear part of the motor 1 (opposite to that of the shaft 1a).

The power element 2a is normally mounted on one side 3a of a printed circuit 3.

The said container 10 has a front wall 11 able to be constrained to the motor 1, a side wall 10a and a rear wall 12 for frontal opening/closing of the container in order to allow insertion/extraction of the control device.

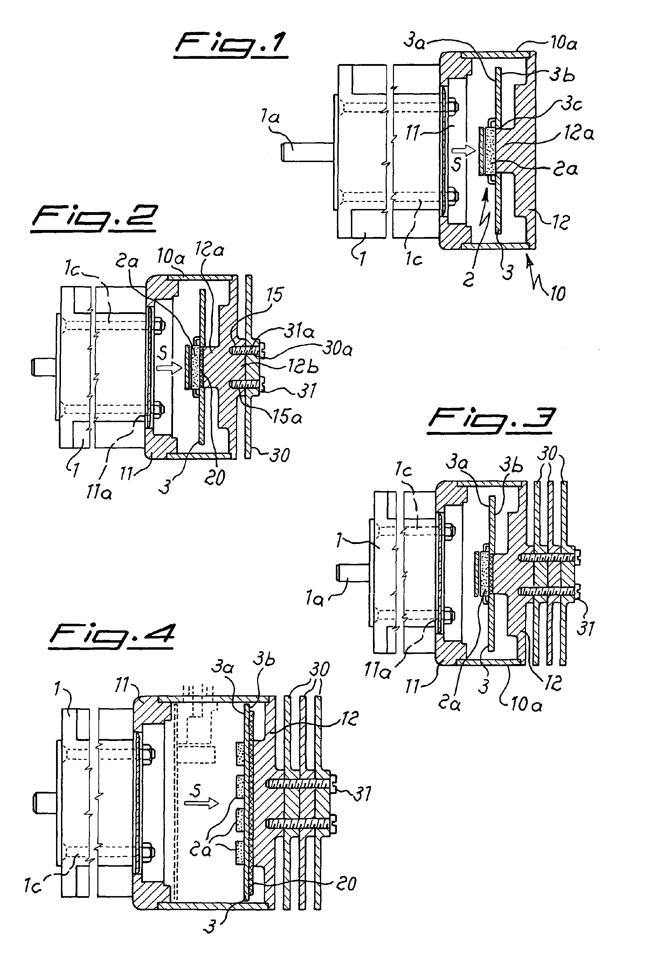

Said rear surface 12 has a projection 12a which extends axially towards the inside of the container and is able to come into contact with the power component 2a; in the example according to Figure 1 it is envisaged that the projection 12a is arranged opposite the power component 2a so that the latter is in direct contact with the end wall 12. In this case it is clear that the power component 2a must be electrically insulated internally in order to avoid electrical damage following contact with the projection 12a and that the printed circuit 3 must have an opening 3c able to allow the projection 12a to pass through and relative contact between the latter and the power component.

By forming the said rear wall 12 with suitable material having a high thermal conductivity, it is clear how the said wall forms a high-capacity heat dissipator in view of the possibility of making use of the whole surface of the wall 12 in order to convey heat outside.

In the embodiment according to Fig. 1 it is envisaged that the power element is electrically insulated and therefore contact thereof with the rear wall 12 of the container 10 does not cause electrical problems; if, however, this were not the case (Fig. 2), it is envisaged that the component 2a/printed circuit 3 and extension 12a of the wall 12 would have, arranged between them, a layer 20 of material which is electrically insulating, but thermally conductive so as not interrupt the transmission of heat between the power element and the rear wall 12 of the container.

Fig. 2 also shows a further characteristic feature of the container according to the invention which comprises a second projection 12b extending outwards and provided with a plurality of holes 15 with a female thread 15a formed in the said projection 12b; said holes 15 are able to mate with the thread 31a of corresponding screws 31 for fixing thermally conductive plates 30 having formed therein through-holes 30a through which the screws 31 are able to pass.

In this configuration, as also illustrated in Fig. 3, it is possible to expand in a modular manner the dissipation surface area by simply adding a series of auxiliary dissipation plates 30; this allows the dissipation capacity of the container to be adapted to the various power levels involved without modifying the form and dimensions of the basic container which may thus be produced on a large scale with obvious savings in terms of production, storage and management of the spare parts. In addition to this it is furthermore possible to regulate the dissipation capacity also once the motor has been installed and functioning, adapting it to the different environmental conditions and actual conditions of use.

Fig. 4 shows a further example of embodiment with the printed circuit 3 which houses a plurality of power elements 2a mounted on a surface 3a of the said printed circuit, the other side 3b of which is connected to the first surface so that the heat generated by the power element passes from the side which supports the power component (front side) to the side opposite to the first side (rear side); in this configuration the dissipators are electrically connected to the rear side 3b of the printed circuit, requiring the use of the electrically insulating, but thermally conductive layer 20, as already described in relation to Fig. 2.

According to a preferred embodiment it is envisaged moreover that the front wall 11 of the container 10 has a form and perimetral dimensions such as to allow frontal mating with the side surfaces 10a of the container and bore holes 11a suitable for mating with stud bolts 1c for constraining the motor 1 to said front wall 11.

In this way it is possible to apply the same container 10 to numerous types of motors by providing the appropriate bore holes 11a on the front wall 11 which is the only component which differs in the various possible cases.

According to preferred embodiments it is envisaged moreover that said front wall is made of heat-insulating material so as to form a thermal barrier able to prevent the heat generated by the motor from passing towards the inside of the container containing the control electronics.

As schematically shown by the arrow "S" in the various figures it is envisaged that the container 10 has, associated with it, means for pushing in an axial direction the printed circuit 3 and/or the component 2a against the projection 12a of the rear part of the container so as to ensure optimum thermal contact between the two parts for dissipation of the heat.

It is therefore obvious how the container according to the invention ensures a high dissipation of the heat while maintaining small dimensions and a high degree of standardization, modularity and the possibility of application to different types of motor.

It is envisaged also that the printed circuit may be reversed so as to have the power component on the same side as the dissipation projection so that it is not required to provide openings in the said printed circuit.

## Claims

1. Container for control and actuating devices (2) of electric motors (1,1a) equipped with power components (2a), comprising a side wall (10a), a front wall (11) able to be constrained to the motor (1) and a rear wall (12), **characterized in that** said rear wall is able to come into thermal contact with the power components (2a) of the said control and actuating devices in order to dissipate the heat.

2. Container according to Claim 1, **characterized in that** said rear wall (12) is made of thermally conductive material.

3. Container according to Claim 1, **characterized in that** said rear wall (12) has a projection (12a) which extends axially towards the inside of the container and is able to come into contact with the power component (2a) of the control device (2).

4. Container according to Claim 3, **characterized in that** said rear part (12) has a second projection (12b) axially extending outwards.

5. Container according to Claim 4, **characterized in that** said second projection (12b) has elements (15) able to mate with corresponding means (31) for fixing auxiliary elements (30) able to increase the overall heat dissipation surface area.

6. Container according to Claim 5, **characterized in that** said elements of the second projection able to mate with the fixing means consist of at least one hole (15) with a female thread (15a).

7. Container according to Claim 5, **characterized in that** said means for fixing the auxiliary elements (30) consist of screws (31) with a thread (31a) matching the female thread (15a) of the holes (15) of the external projection (12b).

8. Container according to Claim 5, **characterized in that** said elements extending the radiating surface area consist of at least one plate (30).

9. Container according to Claim 9, **characterized in that** said auxiliary plate (30) has a projection (30b) extending axially towards the rear part.

10. Container according to Claim 6, **characterized in that** said plate (30) has through-holes (30a) able to allow the said locking means (31) to pass through.

11. Container according to Claim 1, **characterized in that** the power component (2a) is mounted on one side (3a) of a printed circuit (3), the other side (3b) of which is thermally connected to the first side.

12. Container according to Claim 11, **characterized in that** the internal projection of said rear surface (12) is in contact with the surface (3b) of the printed circuit (3) opposite to the surface (3a) which supports the power component (2b).

13. Container according to Claim 1, **characterized in that** a layer (20) of electrically insulating, but thermally conductive material is arranged between the extension (12a) of the rear wall (12) and the power element (2b)/printed circuit (3).

14. Container according to Claim 1, **characterized in that** the front wall (11) of the container (10) has a form and perimetral dimensions such as to allow frontal mating with the side surfaces (10a) of the said containers and bore holes (11a) able to mate with corresponding means (1c) for axially constraining the motor (1) to said front wall (11).

15. Container according to Claim 14, **characterized in that** said front wall is thermally insulating.

16. Container according to Claim 1, **characterized in that** it comprises means (S) for pushing in the axial direction the power component (2a)/printed circuit (3) against the first projection (12a) of the rear wall (12) of the container (10).

17. Electric motor comprising control and actuating devices (2) equipped with at least one power element (2a) and arranged inside a container (10) constrained to the said motor (1), said container comprising a side wall (10a), a front wall (11) able to be constrained to the motor (1) and a rear wall (12), **characterized in that** said rear wall is able to come into thermal contact with the power components (2a, 3a) of the said control and actuating devices (2).

18. Motor according to Claim 17, **characterized in that** said rear wall (12) of the container (10) is made of thermally conductive material.

19. Motor according to Claim 17, **characterized in that** said rear wall (12) has a projection (12a) which extends axially towards the inside of the container (10) and is able to come into contact with the power component (2a).

20. Motor according to Claim 17, **characterized in that** said rear wall (12) of the container (10) has a projection (12b) axially extending outwards.

21. Motor according to Claim 20, **characterized in that** said outwardly extending projection (12b) has elements (15) able to mate with corresponding means (31) for fixing auxiliary elements (30) able to increase the overall heat dissipation surface area.

22. Motor according to Claim 21, **characterized in that** said mating means of the external projection (12b) consist of at least one hole (15) with a female thread (15a).

23. Motor according to Claim 22, **characterized in that** said means for fixing the auxiliary elements (30) consist of screws (31) with a thread (31a) matching the female thread (15a) of the holes (15) of the second projection (12b).

24. Motor according to Claim 21, **characterized in that** said auxiliary elements extending the radiating surface area consist of at least one plate (30).

25. Motor according to Claim 24, **characterized in that** said plate (30) has a projection (30b) extending axially towards the rear part thereof.

26. Motor according to Claim 24, **characterized in that** said plate (30) has through-holes (30a) able to allow said locking means (31) to pass through.

27. Motor according to Claim 17, **characterized in that** the power component (2a) is mounted on one side (3a) of a printed circuit (3), the other side (3b) of which is thermally connected to the first side.

28. Motor according to Claim 27, **characterized in that** the power component (2b)/surface (3b) of the printed circuit (3) opposite to the surface (3a) which supports the power component (2b) is in contact with a projection (12a) of the rear wall (12) of the container (10).

29. Motor according to Claim 28, **characterized in that** a layer (20) of electrically insulating, but thermally conductive material is arranged between the extension (12a) of the rear wall (12) and the power element (2b)/printed circuit (3).

30. Motor according to Claim 17, **characterized in that** the front wall (11) of the container (10) has a form and perimetral dimensions able to allow frontal mating with the side surfaces (10a) of the said container and bore holes (11a) able to mate with corresponding means (1c) for axially constraining the said front wall (11) to the said motor (1).

31. Motor according to Claim 30, **characterized in that** said front wall is thermally insulating.

32. Motor according to Claim 17, **characterized in that** the container (19) houses means (S) for pushing in an axial direction the power component (2a)/printed circuit (3) against the rear wall (12) of the container (10).
